(19)

Europäisches Patentamt

European Patent Office

Office européen des brevets

(11) **EP 4 579 655 A1**

(12) **EUROPEAN PATENT APPLICATION**
published in accordance with Art. 153(4) EPC

(43) Date of publication:
**02.07.2025 Bulletin 2025/27**

(21) Application number: **23888906.7**

(22) Date of filing: **18.09.2023**

(51) International Patent Classification (IPC):
*G10L 15/26* (2006.01)    *G10L 15/04* (2013.01)
*G06F 3/04817* (2022.01)    *G06F 3/04842* (2022.01)
*G06F 3/16* (2006.01)    *G06N 20/00* (2019.01)
*G11B 20/10* (2006.01)

(52) Cooperative Patent Classification (CPC):
**G06F 3/04817; G06F 3/04842; G06F 3/16;**
**G06N 20/00; G10L 15/04; G10L 15/26; G11B 20/10**

(86) International application number:
**PCT/KR2023/014077**

(87) International publication number:
**WO 2024/101641 (16.05.2024 Gazette 2024/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.11.2022 KR 20220148195**

(71) Applicant: **Samsung Electronics Co., Ltd.**
**Suwon-si, Gyeonggi-do 16677 (KR)**

(72) Inventors:
• **PHAN, Thi Binh**
**Suwon-si, Gyeonggi-do 16677 (KR)**
• **NGUYEN, Thi Thanh**
**Suwon-si, Gyeonggi-do 16677 (KR)**
• **DUONG, Thi Yen**
**Suwon-si, Gyeonggi-do 16677 (KR)**
• **NGUYEN, Dang Tung**
**Suwon-si, Gyeonggi-do 16677 (KR)**

(74) Representative: **Appleyard Lees IP LLP**
**15 Clare Road**
**Halifax HX1 2HY (GB)**

(54) **ELECTRONIC DEVICE AND METHOD FOR COMPLEMENTING OMITTED NOTES**

(57) In an embodiment, an electronic device may include a display, a microphone, a memory storing at least one instruction, and at least one processor, and the at least one processor is configured to record, by using the microphone, an external voice, recognize handwritten characters input based on an external input signal to the display, generate handwritten text by converting the handwritten characters to text, determine whether there is a missing symbol based on the handwritten text, in response to determining that there is the missing symbol, obtain a voice segment including a voice recorded for a certain period of time including a time at which the missing symbol is input among the recorded external voice, generate target text by converting voice included in the voice segment to text, determine recommended text corresponding to a location of the missing symbol based on the target text and the handwritten text, and change the missing symbol to the recommended text.

FIG. 2

EP 4 579 655 A1

## Description

## Technical Field

The present disclosure relates to an electronic device, and more particularly, to a method of correcting information missed while note taking using the electronic device.

## Background Art

With recent technological advancements, electronic devices are able to perform various functions apart from simple call functions. For example, an electronic device may support a note taking function by receiving touch inputs to a display. The electronic device may be connected to an additional external device (e.g., a smart pen) for supporting the note taking function by using short-range wireless communication, and may support the note taking function by detecting an input by the external device to the display.

The electronic device may not only simply support the note taking function but also correct information missed and skipped by the user in a note taking procedure. For example, the electronic device may infer information that the user was unable to write down because a lecture progresses too fast, and suggest recommended text. Even for illegible characters written by the user, recommended text may be suggested.

## Disclosure of Invention

## Solution to Problem

According to a technical aspect of the present disclosure, an electronic device may include a display, a microphone, a memory storing at least one instruction, and at least one processor configured to execute the at least one instruction to use the microphone to record an external voice, recognize handwritten characters input based on an external input signal to the display, generate handwritten text by converting the handwritten characters to text, determine whether there is a missing symbol based on the handwritten text, in response to determining that there is the missing symbol, obtain a voice segment including a voice recorded for a certain period of time including time at which the missing symbol is input among the recorded external voice, generate target text by converting a voice included in the voice segment to text, determine recommended text corresponding to a location of the missing symbol based on the target text and the handwritten text, and change the missing symbol to the recommended text.

According to a technical aspect of the present disclosure, the at least one processor may be configured to determine, among the handwritten text, a set number of characters among characters located before the missing symbol as preceding text, determine a set number of characters among characters located after the missing symbol as following text, and determine the recommended text suitable for the location of the missing symbol by comparing the preceding text and the following text with the target text.

According to a technical aspect of the present disclosure, the at least one processor may be configured to, in response to detecting both the preceding text and the following text from the target text, determine characters between the preceding text and the following text as the recommended text, and change the missing symbol to at least part of the recommended text.

According to a technical aspect of the present disclosure, the at least one processor may be configured to, in response to detecting only the preceding text but not the following text from the target text, determine characters from a character right after the preceding text to a last character of the target text as the recommended text, and change the missing symbol to the recommended text.

According to a technical aspect of the present disclosure, the at least one processor may be configured to, in response to detecting only the following text but not the preceding text from the target text, determine characters from a starting character of the target text to a character right before the following text as recommended text, and change the missing symbol to the recommended text.

According to a technical aspect of the present disclosure, the at least one processor may be configured to, in response to detecting neither the preceding text nor the following text from the target text, change the missing symbol to an icon indicating the voice segment, and replay the voice segment in response to a user input to the icon.

According to a technical aspect of the present disclosure, the at least one processor may be configured to use a predetermined machine learning algorithm to convert handwritten characters to the handwritten text (handwriting recognition (HWR)).

According to a technical aspect of the present disclosure, the machine learning algorithm may include at least one of CNN, RNN and CTC.

According to a technical aspect of the present disclosure, the missing symbol may include a dash symbol or an icon.

According to a technical aspect of the present disclosure, the at least one processor may be configured to identify at least one line segment among the handwritten characters, and determine the line segment as the dash symbol when a length of the line segment is larger than a set value.

According to a technical aspect of the present disclosure, the at least one processor may be configured to determine an external voice recorded from time at which a handwritten character is input first after the missing symbol is input to time at which a next missing symbol is input.

According to a technical aspect of the present disclosure, the at least one processor may be configured to start recording the external voice simultaneously with executing of a set application, and determine an external voice recorded from time at which the application is executed to time at which the missing symbol is input for the first time as the voice segment.

According to a technical aspect of the present disclosure, the at least one processor may be configured to use the microphone to start recording the external voice, and in response to the external voice being not detected, stop recording the external voice when a period of time for which the external voice is not detected is longer than a set period of time.

According to a technical aspect of the present disclosure, the electronic device may further include a communication module, and the at least one processor may be configured to use the communication module to establish communication connection with an external device to receive voice data collected by the external device, and determine the voice segment by using the voice data.

According to a technical aspect of the present disclosure, a method of correcting missing handwriting by an electronic device including a microphone and a display includes using the microphone to record an external voice, recognizing handwritten characters input based on an external input signal to the display, generating handwritten text by converting the handwritten characters to text, determining whether there is a missing symbol based on the handwritten text, in response to determining that there is the missing symbol, obtaining a voice segment including a voice recorded for a certain period of time including time at which the omission symbol is input among the recorded external voice, generating target text by converting the voice included in the voice segment to text, determining recommended text corresponding to a location of the missing symbol based on the target text and the handwritten text, and changing the missing symbol to the recommended text.

**Brief Description of Drawings**

FIG. 1 is a block diagram of an electronic device, according to an embodiment of the present disclosure.
FIG. 2 is a diagram for describing a method, performed by an electronic device, of correcting missing handwriting, according to an embodiment of the present disclosure.
FIG. 3 is a diagram for describing operations of an electronic device stopping and resuming recording based on detecting of an external voice, according to an embodiment of the present disclosure.
FIG. 4 is a diagram for describing a missing symbol, according to an embodiment of the present disclosure.
FIG. 5 is a diagram for describing an operation of an electronic device determining a voice segment based on a missing symbol, according to an embodiment of the present disclosure.
FIGS. 6A, 6B, 6C and 6D are diagrams for describing an operation of an electronic device determining recommended text based on a preceding character string or a following character string, according to an embodiment of the present disclosure.
FIGS. 7A, 7B and 7C are diagrams for describing an operation of an electronic device displaying recommended text on a display, according to an embodiment of the present disclosure.
FIG. 8 is a flowchart for describing a method, performed by an electronic device, of correcting missing handwriting, according to an embodiment of the present disclosure.
FIG. 9 is a flowchart for describing a method, performed by an electronic device, of recording an external voice, according to an embodiment of the present disclosure.
FIG. 10 is a flowchart for describing a method, performed by an electronic device, of determining a missing symbol among handwritten characters, according to an embodiment of the present disclosure.
FIG. 11 is a flowchart for describing a method, performed by an electronic device, of changing a missing symbol to recommended text or an audio file, according to an embodiment of the present disclosure.

**Mode for the Invention**

The terms are selected as common terms currently widely used, taking into account functions in the present embodiments, which may however depend on intentions of ordinary people in the art, judicial precedents, emergence of new technologies, and the like. Some terms as herein used are selected at the applicant's discretion, in which case, the terms will be explained later in detail in a corresponding section. Therefore, the terms should be defined based on their meanings and descriptions throughout the present embodiments.

Various modifications may be made to the present embodiments, which will be described more fully hereinafter with reference to the accompanying drawings. The present embodiments should be understood as not limited to particular disclosed forms but including all the modifications, equivalents and replacements which belong to technical scope and ideas of the present embodiments. The terminology used herein is just for the purpose of describing embodiments and is not intended to limit the present embodiments.

Unless otherwise stated, the terms used in the present embodiments have the same meanings as commonly understood by those of ordinary skill in the art to which the present embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Detailed descriptions of the present disclosure, as will now be described, will refer to accompanying drawings that illustrate particular embodiments in which the present disclosure may be practiced. The embodiments will be described in detail for those of ordinary skill in the art to fully practice them. It should be understood that various embodiments of the present disclosure are different from one another but are not necessarily mutually exclusive. For example, specific forms, structures and features disclosed in the specification may be implemented by being modified from one embodiment to another without deviating from the spirit and scope of the present disclosure. It should also be understood that positions or layouts of respective components in each embodiment may be modified without deviating from the spirit and scope of the present disclosure. Accordingly, the detailed description below is not to be taken in a limiting sense, and the scope of the present disclosure should be understood as encompassing the scope of the claims and all the equivalents. In the drawings, like reference numerals refer to like elements. In the accompanying drawings, some components are exaggerated, omitted or schematically illustrated, and the size of each component does not fully reflect an actual size. Accordingly, the present disclosure is not limited by the relative size or interval drawn in the accompanying drawings.

Embodiments of the disclosure will now be described with reference to accompanying drawings to describe the present disclosure for those of ordinary skill in the art to readily put them into practice.

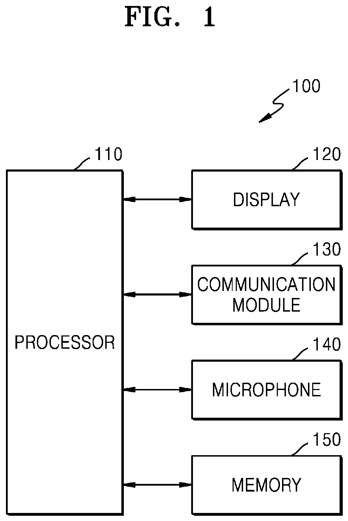

FIG. 1 is a block diagram of an electronic device, according to an embodiment of the present disclosure.

Referring to FIG. 1, the electronic device 100 may include a display 120, a communication module 130, a microphone 140, a processor 110 and a memory 140. Components of the electronic device 100 are not, however, limited thereto, and some of the illustrated components may be omitted or substituted. At least some of the illustrated (or non-illustrated) components of the electronic device 100 may be operatively, functionally and/or electrically connected to one another.

In an embodiment, the display 120 may display various images under the control of the processor 110. The display 120 may be implemented with one of a liquid crystal display (LCD), a light-emitting diode (LED) display, a micro LED display, a quantum dot (QD) display or an organic LED (OLED) display, without being limited thereto. The display 120 may be formed with a touch screen for detecting a touch with the user's body portion (e.g., a finger) or an input device (e.g., a stylus pen) and/or a proximity touch (or hovering) input.

In an embodiment, the display 120 may have at least a portion which is flexible, and may be implemented as a foldable display or a rollable display.

In an embodiment, the communication module 130 may communicate with an external device through a wireless network under the control of the processor 110. The communication module 130 may include hardware and software modules for transmitting or receiving data to or from a cellular network (e.g., a long term evolution (LTE) network, a 5G network, or a new radio (NR) network) and a short-range network (e.g., Wi-Fi, bluetooth).

In an embodiment, the microphone 140 may collect an external sound such as a voice of the user and convert the sound into a voice signal, i.e., digital data. In an embodiment, the electronic device 100 may contain the microphone 140 in a portion of the housing (not shown), or receive a collected voice signal from an external microphone connected thereto wiredly/wirelessly.

In an embodiment, the memory 140 may include a volatile memory and a non-volatile memory to temporarily or permanently store various data items.

In an embodiment, the memory 140 may store various instructions to be performed by the processor 110. The instructions may include control instructions such as arithmetic and logic operations, data transfer, input and output, etc., which may be recognized by the processor 110.

In an embodiment, the processor 110 may be a component operatively, functionally and/or electrically connected to the respective components (e.g., the display 120, the communication module 130, the microphone 140 and the memory 140) to perform operations or data processing for controlling and/or communicating with the respective components.

In an embodiment, there are no limitations on operations and data processing functions that may be implemented by the processor 110 on the electronic device 100, but in the following description, an operation of correcting missing handwriting will be focused. Operations of the processor 110 as will be described below may be performed by loading the instructions stored in the memory 140.

The processor 110 may use the microphone 140 to record an external voice. The processor 110 may obtain the external voice by using the microphone 140 in various environments. For example, the user may record a lecturer's voice while listening to a lecture, or record a voice of a presenter during a meeting, or record a voice of a speaker during a conversation. In an embodiment, the processor 110 may start recording an external voice simultaneously with executing of an application. For example, the processor 110 may execute an application for note taking in response to a touch input of the user to the display 120, and start recording an external voice without any additional instruction. In an embodiment, the processor 110 may stop recording the external voice when no external voice is detected. For example, the processor 110 may stop recording the external voice when the external voice is not detected for a set period of time (e.g., 15 seconds). The processor 110 may resume recording when the external voice is detected again after the recording is stopped. The processor 110 may generate a recording file that minimizes a time for which no external voice is detected. For example, the processor 110 may record a first external voice during a first time, detect no external voice during a second time, and record a second external voice during a third time. The processor 110 may generate a recording file with a gap of a shorter time than an actual time for which no external voice is detected, by inserting the gap of a set time between the first external voice and the second external voice.

In an embodiment, the processor 110 may establish communication connection with an external device through the communication module 130, and receive voice data received through a microphone of the external device. For example, in a case of recording a lecture, a data file with a voice recorded through a microphone built into an electronic device of a lecturer may be received through the communication connection. As voice data received from an external device may be recorded with clearer sound quality, it may be advantageous to obtaining missing information.

The processor 110 may recognize handwritten characters input based on an external input signal to the display 120. The processor 110 may recognize handwritten characters based on an external input signal received through a running application. For example, the user may use a writing tool (e.g., a smart pen) to write down on the electronic device 100, and the processor 110 may recognize characters written by the user.

The processor 110 may generate handwritten text by converting the handwritten characters to text. The processor 110 may use handwriting recognition (HWR) to generate handwritten text by converting the recognized handwritten characters to text. In an embodiment, the processor 110 may use an artificial intelligence (AI) algorithm to generate the handwritten text. For example, the processor 110 may use at least one of convolution neural network (CNN), recurrent neural network (RNN), deep neural network (DNN) or connectionist temporal classification (CTC) algorithm to generate handwritten text.

The processor 110 may determine whether there is a missing symbol based on the handwritten text. The missing symbol (omission symbol) may be a symbol indicating that there is missing information at the corresponding location among the handwritten characters. For example, the missing symbol may include an icon or a dash symbol having a length of a set value or more. For example, in response to identifying a line segment having a length of the set value or more among the handwritten text, the processor 110 may determine that the line segment is the dash symbol. For example, the processor 110 may determine whether a certain line segment is the dash symbol according to equation 1 below:

[Equation 1]

$$D_{miss} = \sqrt{(X_2 - X_1)^2 + (Y_2 - Y_1)^2}$$

$D_{miss}$: Length of a line segment
$X_1$: X coordinate of a starting point of the line segment
$X_2$: Y coordinate of the starting point of the line segment
$Y_1$: X coordinate of an end point of the line segment
$Y_2$: Y coordinate of the end point of the line segment

In an embodiment, the processor 110 may check with the user whether the character in question corresponds to the dash symbol to increase accuracy in decision of the dash symbol For example, the processor 110 may output a message checking with the user whether the handwriting corresponds to the dash symbol on the display 120, and based on a user input for the message, determine that the handwriting is the dash symbol.

For example, in response to identifying a set icon in the handwritten text, the processor 110 may determine that there is a missing symbol in the handwritten text. The set icon may be one or more icons, and the user may determine which one of the one or more icons will be used. When there is no set icon and line segment having a length of the set value or more in the handwritten text, the processor 110 may determine that there is no missing symbol in the handwritten text.

In response to determining that there is the missing symbol, the processor 110 may obtain a voice segment including a voice recorded for a certain period of time including the time at which the missing symbol is input among the recorded external voice. For example, when the missing symbol is input at first time, the processor 110 may obtain a voice segment including a voice recorded for a set period of time (e.g., 30 seconds) including the first time. As the processor 110 does not use the entire recording file to determine text corresponding to the missing symbol, it may determine missing information more efficiently.

The processor 110 may generate target text by converting the voice segment into the text. The processor 110 may use speech-to-text (STT) for converting voice to text to generate the target text.

The processor 110 may determine recommended text corresponding to the location of the missing symbol based on the target text and the handwritten text. The processor 110 may determine the recommended text among the handwritten text based on text located near the missing symbol. In an embodiment, the processor 110 may determine a set number (e.g., 7) of characters located before the missing symbol as preceding text, and determine the set number of characters located after the missing symbol as following text. The processor 110 may detect the preceding text and/or the following text from the target text, and determine recommended text based on the detection result.

In an embodiment, the processor 110 may detect both the preceding text and the following text from the target text. The processor 110 may determine characters that exist between the preceding text and the following text in the target text as recommended text. For example, the processor 110 may determine characters from a character right after the preceding text to a character right before the following text as recommended text.

In an embodiment, the processor 110 may detect only the preceding text but not the following text from the target text. The processor 110 may determine characters of the target text from a character right after the preceding text to a last character of the target text as recommended text. The recommended text including all to the last character may not be highly accurate, but the chances are high that information desired by the user may be included in the determined recommended text.

In an embodiment, the processor 110 may detect only the following text but not the preceding text from the target text. The processor 110 may determine characters of the target text from the first character of the target text to a character right before the following text as recommended text. The recommended text starting from the first character of the target text may not be highly accurate, but the chances are high that information desired by the user may be included in the determined recommended text.

In an embodiment, the processor 110 may fail to detect both the preceding text and the following text from the target text. In response to the fact that the processor 110 fails to detect both the preceding text and the following text, the processor 110 may not determine recommended text.

The processor 110 may change the missing symbol to recommended text. The processor 110 may determine a different method of displaying the recommended text depending on the procedure for determining the recommended text. In an embodiment, when the processor 110 detects both the preceding text and the following text from the target text, the processor 110 may change the missing symbol to at least a portion of the determined recommended text. As the accuracy of the determined recommended text is high when both the preceding text and the following text are detected from the target text, there is little need for the user to reconfirm the recommended text. The processor 110 may display only some characters instead of displaying full recommended text on the display 120, and display the full recommended text based on a user input (e.g., smart pen hovering).

In an embodiment, when the processor 110 detects only the preceding text or the following text from the target text, the processor 110 may change the missing symbol to the determined full recommended text. When only the preceding text or the following text is detected from the target text, the determined recommended text may not be highly accurate. The processor 110 may change the missing symbol to the full recommended text so as for the user to check and correct the full recommended text.

In an embodiment, when the processor 110 fails to detect both the preceding text and the following text from the target text, the processor 110 may change the missing symbol to an icon indicating a voice segment. The processor 110 may replay the voice segment in response to a touch input to the icon. In response to the fact that the processor 110 fails to detect both the preceding text and the following text from the target text, the processor 110 may not determine recommended text. Hence, a voice segment may be provided in order for the user to listen to the recorded voice segment again and identify the missing information.

In an embodiment, the processor 110 may provide information for the user by applying the same method even when it is hard to convert the handwritten characters to handwritten text. For example, when the handwriting is illegible because the user wrote them down hurriedly, making it scribbled, it may be difficult for the processor 110 to convert the handwritten characters into text. In the case of having difficulty in converting the handwritten characters into text, the processor 110 may change the characters in question to set text (or icon) (e.g., XXX), and generate recommended text for the characters by using the preceding text, the following text and the target text.

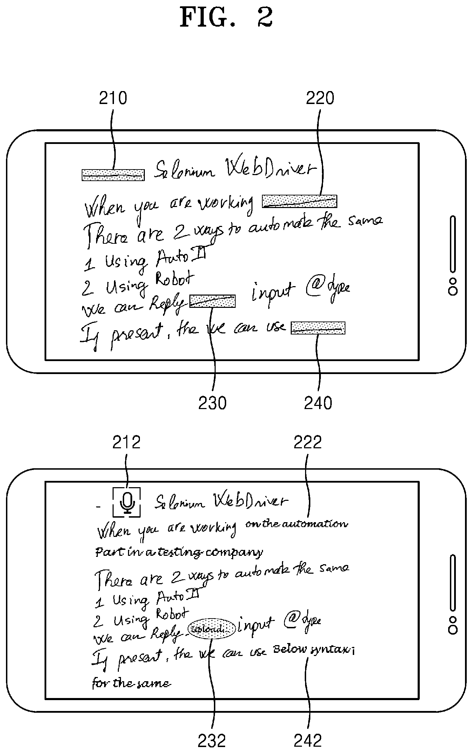

FIG. 2 is a diagram for describing a method of correcting missing handwriting by an electronic device, according to an embodiment of the present disclosure.

The processor may convert handwritten characters into handwritten text. The processor may use an AI algorithm to convert the handwritten characters into handwritten text. The processor may determine at least one missing symbol in the handwritten text. Although only dash symbols are shown in FIG. 2, the missing symbols may include dash symbols or icons. The processor may determine some of the handwritten text as dash symbols according to a set standard. For example, the processor may determine a line segment as a dash symbol when the length of the line segment is longer than a set length. Referring to FIG. 2, the processor may determine a first dash symbol 210, a second dash symbol 220, a third dash symbol 230 and a fourth dash symbol 240.

The processor may determine recommended text based on preceding text and following text of the missing symbol. The processor may determine the recommended text in response to detecting at least one of the preceding text and the following text from the target text. When the processor detects both the preceding text and the following text from the target text, the processor may determine characters from a character right after the preceding text to a character right before the following text as recommended text. In the case that both the preceding text and the following text are detected, the processor may change the missing symbol to some characters instead of the full recommended text.

For example, when the processor detects both the preceding text and the following text of the third dash symbol 230 from the target text, the processor may change the missing symbol to a portion 232 (e.g., 'upload') of the recommended text instead of the full recommended text (e.g., upload the file using attribute). In the case that both the preceding text and the following text of the dash symbol are detected from the target text, it is more likely that the recommended text corresponds to the missing information, so there is little need for the user to check the full recommended text. Accordingly, the processor may display only a portion instead of the full recommended text.

When the processor detects only one of the preceding text and the following text from the target text, the processor may change the missing symbol to the determined full recommended text. For example, the processor may not detect the preceding text but detect the following text of the second dash symbol 220. The processor may determine characters from the first character of the target text to a character right before the following text as recommended text. The processor may change the missing symbol to the full recommended text 222. For the fourth dash symbol 240, the processor may detect the preceding text but not the following text. The processor 110 may determine characters from a character right after the preceding text of the fourth dash symbol 240 to the last character of the target text as recommended text. The processor may change the missing symbol to the full recommended text 242. As the accuracy of the recommended text is more likely to be low when the processor detects only one of the preceding text and the following text, the processor may provide the full recommended text for the user to correct it immediately.

When the processor fails to detect both the preceding text and the following text from the target text, the processor may change the missing symbol to an icon 212 indicating a voice segment. For example, the processor may not detect both the preceding text and the following text of the first dash symbol 210 from the target text. The processor may change the missing symbol to the icon 212 indicating the voice segment without determining recommended text. The processor may replay the voice segment in response to a touch input to the icon 212, and the user may listen to the replayed voice segment to obtain required information.

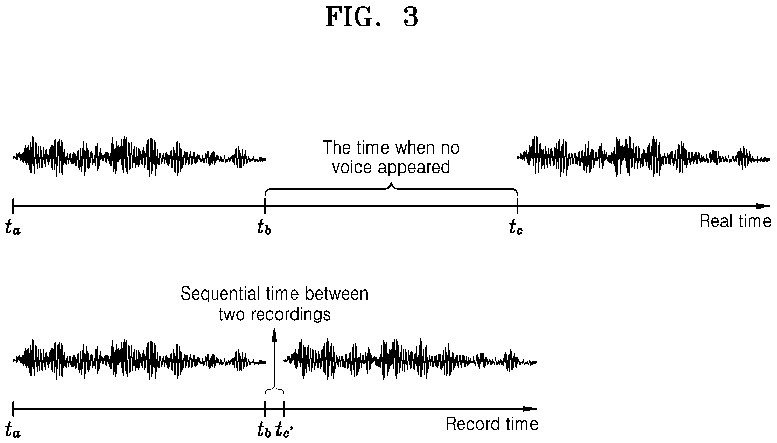

FIG. 3 is a diagram for describing operations of an electronic device stopping and resuming recording based on detecting of an external voice, according to an embodiment of the present disclosure.

The processor may use a microphone to record an external voice. In an embodiment, the processor may activate a voice recording function simultaneously with executing of a set application (e.g., a handwriting application or a note application). The processor may detect an external voice after activating the voice recording function. The processor may keep recording the external voice when the external voice is detected within a set period of time. The processor may stop recording the external voice when the external voice is not detected within the set period of time. The processor may resume recording when the external voice is detected again while the recording of the external device is stopped. The processor may generate a recording file that minimizes a time for which recording is stopped.

For example, referring to FIG. 3, the processor may start voice recording at first time $t_a$. The processor may stop the voice recording at second time $t_b$ at which a time for which no external voice is detected during the voice recording is longer than a set time interval. Afterward, voice recording may be resumed in response to an external voice being detected at third time $t_c$. The processor may generate a recording file that minimizes a time between a first external voice recorded from the first time $t_a$ to the second time $t_b$ and a second external voice recorded from the third time $t_c$. For example, the processor may generate a recording file in which the second external voice is recorded from fourth time $t_{c'}$ after a set time gap from the second time $t_b$, instead of the third time $t_c$ at which the second external voice is actually detected.

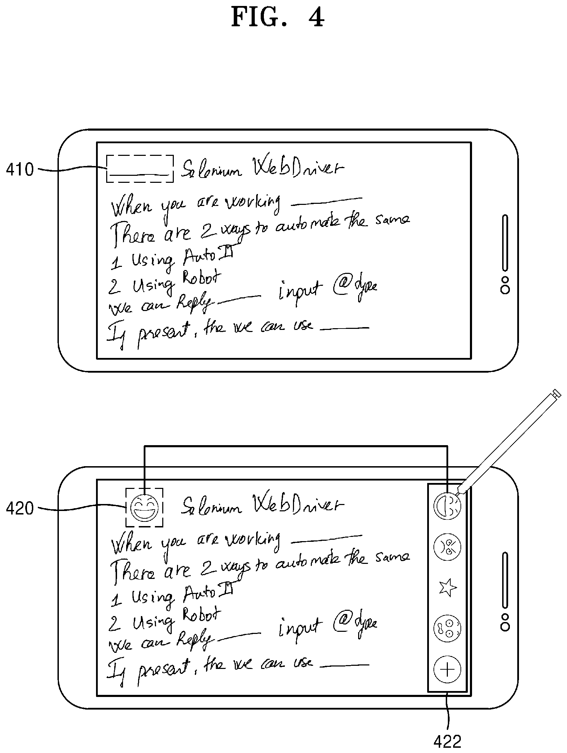

FIG. 4 is a diagram for describing a missing symbol, according to an embodiment of the present disclosure.

The processor may determine at least a portion of handwritten text converted from handwritten characters as a missing symbol. The processor may determine the at least a portion of the handwritten text as the missing symbol according to a set standard. For example, the processor may determine a line segment having a length loner than a set length or more among line segments as a dash symbol 410. As the dash symbol 410 is a punctuation symbol that may be commonly used in sentences, in order to distinguish the dash symbol 410 that refers to the missing symbol rather than that used for common use, only a line segment equal to or longer than the set length may be determined as the missing symbol. The set length of line segment for the processor to identify the line segment as the dash symbol 410 may be determined according to the user's writing habit. Referring to FIG. 4, the processor may convert a line segment drawn before 'Selenium' to handwritten text, and determine the converted line segment as the dash symbol 410.

In response to a set icon 420 being detected from the handwritten text, the processor may determine the icon 420 as the missing symbol. The processor may display a floating bar 422 including at least one icon 420 corresponding to the missing symbol on one side of the display, and output the at least one icon 420 included in the floating bar 422 on the application based on a touch input. For example, referring to FIG. 4, the user may touch the icon 420 included in the floating bar 422 with a smart pen, and drag and drop the icon 420 to be output at a desired location on the application. The processor may detect the icon 420 output by the user, and determine the icon 420 as the missing symbol. The icon 420 that may be provided by the processor as the icon 420 corresponding to the missing symbol is not limited to what is shown in FIG. 4, and various icons 420 may be included in the floating bar 422 according to user settings.

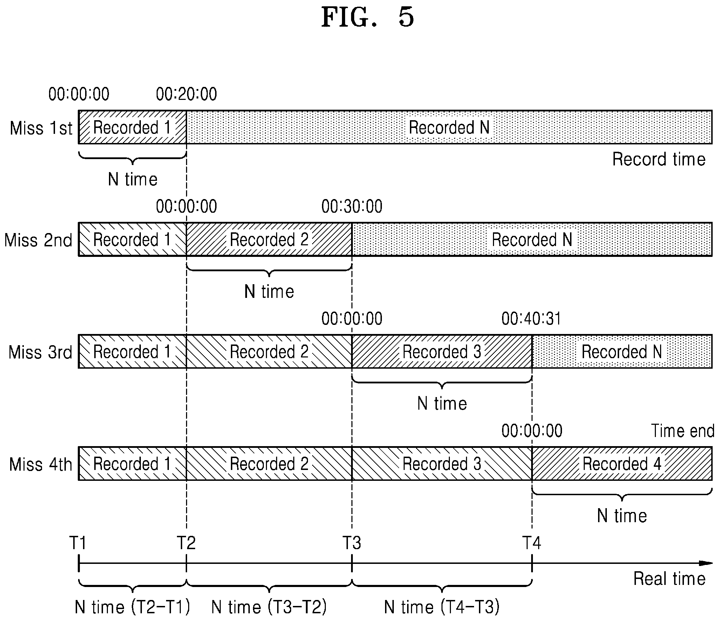

FIG. 5 is a diagram for describing an operation of an electronic device determining a voice segment based on a missing symbol, according to an embodiment of the present disclosure.

The processor may determine a voice segment based on time at which a missing symbol is input. For example, the processor may determine the voice segment including a voice recorded during a time from right after one missing symbol is input to right after the next missing symbol is input.

Referring to FIG. 5, note taking and voice recording may start at T1, and missing symbols may be input at T2, T3 and T4. The processor may generate a first voice segment including a voice recorded during a time from T1 to T2, a second voice segment including a voice recorded during a time from T2 to T3, and a third voice segment including a voice recorded during a time from T3 to T4. The generated voice segments may have different lengths. For example, the first voice segment, the second voice segment and the third voice segment may be voices recorded for 20 minutes, 30 minutes and 40 minutes and 31 seconds, respectively. The user may listen to the voice segments and obtain missing information.

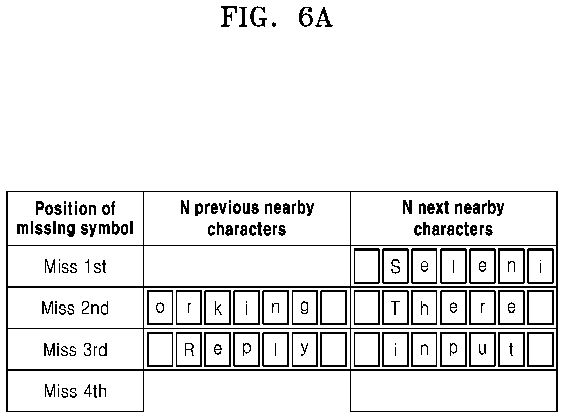

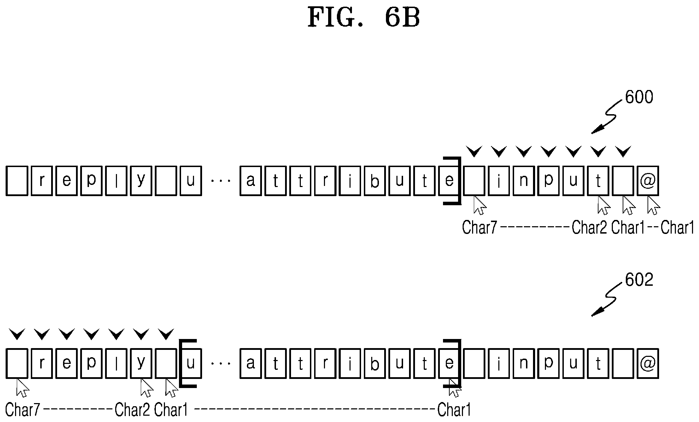

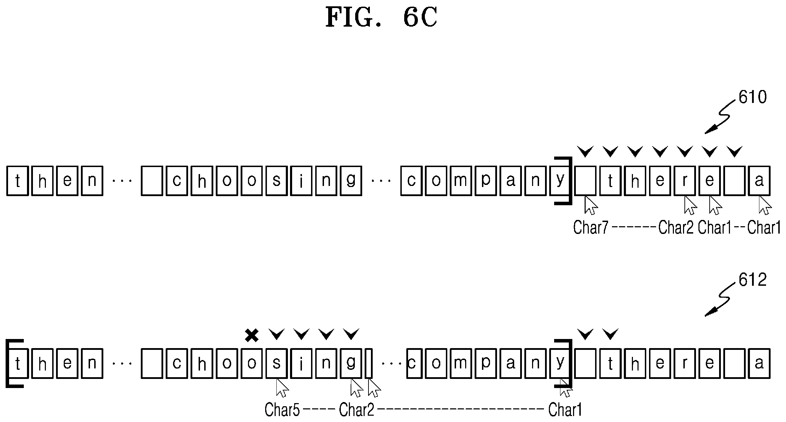

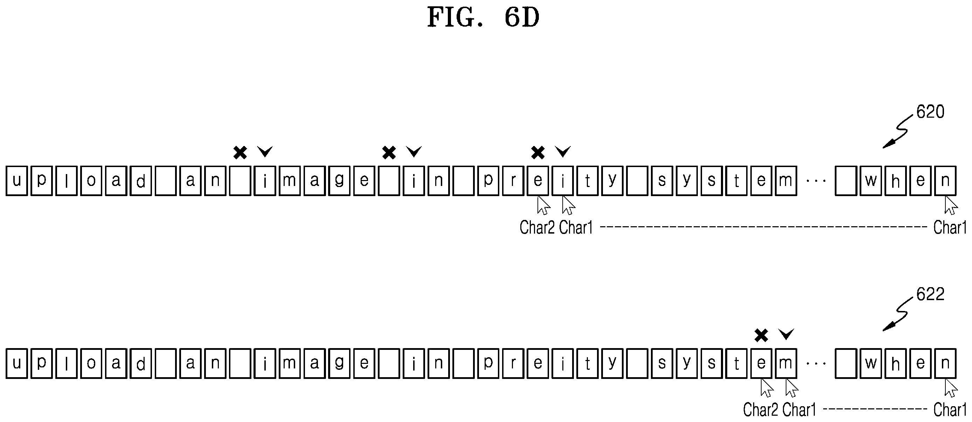

FIGS. 6A, 6B, 6C and 6D are diagrams for describing an operation of an electronic device determining recommended text based on a preceding character string or a following character string, according to an embodiment of the present disclosure.

FIG. 6A is a table that summarizes preceding text and following text of each missing symbol. The preceding text and the following text will be described as each having a length of 7 characters, the length of the preceding text and the following text is not limited thereto, and the length may increase for higher accuracy or decrease for quicker recommendation. The processor 110 may determine recommended text corresponding to the location of the missing symbol based on the preceding text and the following text. A method of determining the recommended text will now be described in detail.

Referring to FIG. 6A, as the first missing symbol is located in the first part of the handwritten text, there is no preceding text and the following text is 'seleni'. The preceding text of the second missing symbol is 'orking', and the following text is 'There'. The preceding text of the third missing symbol is 'Reply', and the following text is 'input'.

FIG. 6B shows an embodiment of determining recommended text when both preceding text and following text are detected from target text. The processor may detect the following text 'input' of the third missing symbol from the target text, in 600. The processor may determine that the recommended text is included in 'reply u...attribute' located before 'input' in the target text. The processor may detect the preceding text 'Reply' of the third missing symbol from the target text, in 602. The processor may determine 'u...attribute' behind 'Reply' in the target text as recommended text.

FIG. 6C shows an embodiment of determining recommended text when the preceding text is not detected and only the following text is detected from the target text. The processor may detect the following text 'There' of the second missing symbol from the target text, in 610. The processor may determine that the recommended text is included in 'then...choosing...company' located before 'There' in the target text. The processor may not detect the preceding text 'orking' of the second missing symbol from the target text, in 612. The processor may determine 'then...choosing...company' as recommended text. Even in a case that the processor does not detect the following text but detects only the preceding text from the target text, the recommended text may be determined in the same process.

FIG. 6D shows an embodiment of an occasion when both the preceding text and the following text are not detected from the target text. The processor may not detect the following text 'seleni' of the first missing symbol from the target text in 620. The first missing symbol is input to a first part of the handwritten text, so the preceding text does not exist in 622. In an embodiment, when the processor fails to detect the preceding text or the following text from the target text, it may adjust the length of the preceding text or the following text. For example, it may reduce the length of the following text and determine 'sele' as the following text, or increase the length of the following text and determine 'selenium' as the following text. When the preceding text and the following text are not detected from the target text even after the length of the preceding text and the following text is adjusted, the processor may not determine the recommended text.

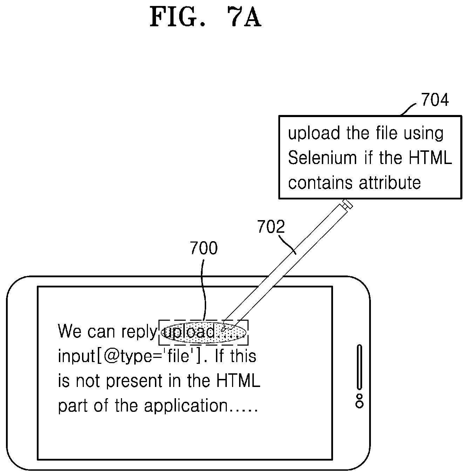

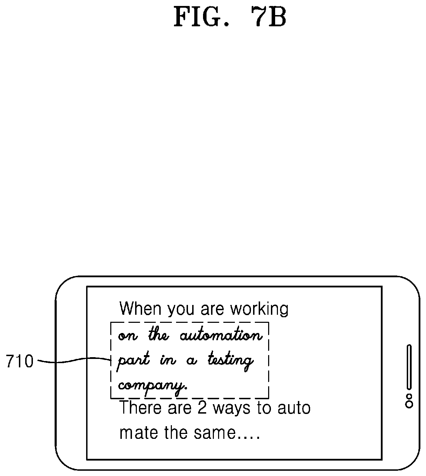

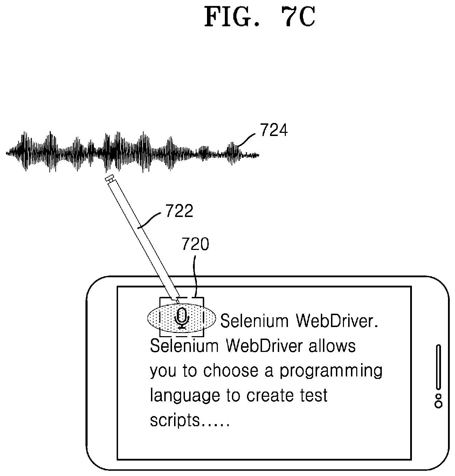

FIGS. 7A, 7B and 7C are diagrams for describing an operation of an electronic device displaying recommended text on a display, according to an embodiment of the present disclosure.

The processor may determine recommended text according to what are described in FIGS. 6A to 6D, and display the recommended text differently depending on the procedure in which the recommended text is determined. FIG. 7A shows an embodiment in which a processor displays recommended text when both preceding text and following text are found in the target text. The processor may change a missing symbol to a portion 700 (e.g., one word) of the recommended text. The processor may display full recommended text 704 on one side of the display based on a user input (e.g., hovering of a smart pen 702) to the recommended text. When the processor detects both the preceding text and the following text from the target text, the accuracy of the determined recommended text is high, so the processor may not display the full recommended text on the display. Referring to FIG. 7A, the processor may determine the recommended text 704 'upload the file using Selenium if the HTML contains attribute', and change the missing symbol to 'upload...' 700. In response to a hovering input of the smart pen 702 to 'upload...' 700, the processor may display the full recommended text 704 on a side of the display.

FIG. 7B shows an embodiment in which a processor displays recommended text when detecting only one of the preceding text and the following text from the target text. The processor may change the missing symbol to the full recommended text 710. The processor may display the recommended text in a different font from the handwritten text. When only one of the preceding text and the following text is detected from the target text, the accuracy of the recommended text may be low, so the user may display the full text 710 on the display for the user to easily correct it.

FIG. 7C shows an embodiment of an occasion when the processor does not find both the preceding text and the following text in the target text. The processor may change the missing symbol to an icon 720 that indicates a voice segment 724. As the recommended text may not be determined when both the preceding text and the following text are not found in the target text, the voice segment 724, which is an original voice file, may be provided directly for the user to guide the user to determine them. The processor may replay the voice segment 724 in response to a user input (e.g., hovering of the smart pen 722) to the icon 720 that indicates the voice segment 724. The user may obtain missing information by referring to the voice segment 724.

According to a technical aspect of the present disclosure, an electronic device may include a display, a microphone, a memory storing at least one instruction, and at least one processor, wherein the at least one processor is configured to execute the at least one instruction to use the microphone to record an external voice, recognize handwritten characters input based on an external input signal to the display, generate handwritten text by converting the handwritten characters to text, determine whether there is a missing symbol based on the handwritten text, in response to determining that there is the missing symbol, obtain a voice segment including a voice recorded for a certain period of time including time at which the missing symbol is input among the recorded external voice, generate target text by converting the voice included in the voice segment to text, determine recommended text corresponding to a location of the missing symbol based on the target text and the handwritten text, and change the missing symbol to the recommended text.

According to a technical aspect of the present disclosure, the at least one processor may be configured to determine, among the handwritten text, a set number of characters among characters located before the missing symbol as preceding text, determine a set number of characters among characters located after the missing symbol as following text, and determine recommended text suitable for the location of the missing symbol by comparing the preceding text and the following text with the target text.

According to a technical aspect of the present disclosure, the at least one processor may be configured to, in response to detecting both the preceding text and the following text from the target text, determine characters between the preceding text and the following text as recommended text, and change the missing symbol to at least part of the recommended text.

According to a technical aspect of the present disclosure, the at least one processor may be configured to, in response to detecting only the preceding text but not the following text from the target text, determine characters from a character right after the preceding text to a last character of the target text as recommended text, and change the missing symbol to the recommended text.

According to a technical aspect of the present disclosure, the at least one processor may be configured to, in response to detecting only the following text but not the preceding text from the target text, determine characters from a starting character of the target text to a character right before the following text as recommended text, and change the missing symbol to the recommended text.

According to a technical aspect of the present disclosure, the at least one processor may be configured to, in response to detecting neither the preceding text nor the following text from the target text, change the missing symbol to an icon indicating the voice segment, and replay the voice segment in response to a user input to the icon.

According to a technical aspect of the present disclosure, the at least one processor may be configured to use a predetermined machine learning algorithm to convert handwritten characters to handwritten text (handwriting recognition (HWR)).

According to a technical aspect of the present disclosure, the machine learning algorithm may include at least one of CNN, RNN and CTC.

According to a technical aspect of the present disclosure, the missing symbol may be a dash symbol or an icon.

According to a technical aspect of the present disclosure, the at least one processor may be configured to identify at least one line segment among the handwritten characters, and determine the line segment as a dash symbol when the line segment is longer than a set value.

According to a technical aspect of the present disclosure, the at least one processor may be configured to determine an external voice recorded from time at which a first handwritten character is input after the missing symbol is input to time at which a next missing symbol is input.

According to a technical aspect of the present disclosure, the at least one processor may be configured to start recording the external voice simultaneously with executing of a set application, and determine an external voice recorded from time at which the application is executed to time at which a first missing symbol is input as the voice segment.

According to a technical aspect of the present disclosure, the at least one processor may be configured to use the microphone to start recording an external voice, and in response to the external voice not being detected, stop recording the external voice when a time for which the external voice is not detected is longer than a set time.

According to a technical aspect of the present disclosure, the electronic device may further include a communication module, wherein the processor may be configured to use the communication module to establish communication connection with an external device to receive voice data collected by the external device, and determine a voice segment by using the voice data.

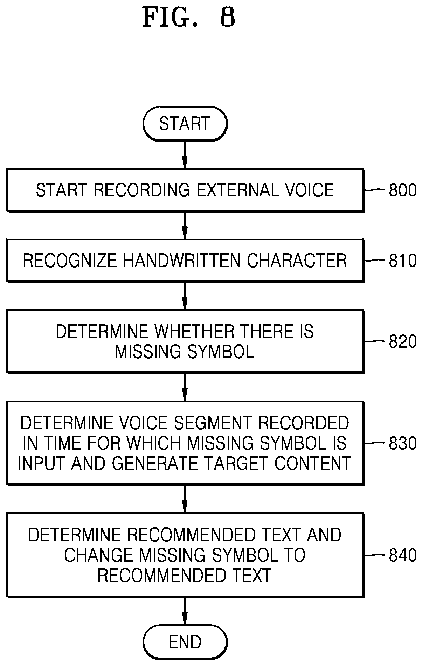

FIG. 8 is a flowchart for describing a method of correcting missing handwriting by an electronic device, according to an embodiment of the present disclosure.

The electronic device may start recording an external voice in operation 800. The electronic device may use a microphone to start recording the external voice. The electronic device may start recording the external voice along with execution of a set application.

The electronic device may recognize a handwritten character in operation 810. The electronic device may recognize the handwritten character in response to an external signal input to the display. For example, the electronic device may recognize the handwritten character in response to a touch input of the user with a smart pen.

The electronic device may generate handwritten text by converting the handwritten characters to text. The electronic device may use an AI algorithm (e.g., CNN, RNN or CTC) to convert the handwritten characters to the handwritten text.

The electronic device may determine whether there is a missing symbol in operation 820. The electronic device may determine whether there is a dash symbol or an icon in the handwritten text. The electronic device may determine a line segment, which is equal to or longer than a set length, as the dash symbol. The electronic device may determine that there is a missing symbol when one of at least one set icon is detected.

In operation 830, the electronic device may determine a voice segment recorded in a time for which the missing symbol is input, and generate target text. The electronic device may generate a voice segment including at least a portion of the recorded external voice. The electronic device may generate the voice segment including a voice with information corresponding to the missing symbol based on a time for which the missing symbol is input. The electronic device may generate the target text by using a voice recognition technology to convert the voice segment to the text.

In operation 840, the electronic device may determine recommended text and change the missing symbol to the recommended text. The electronic device may determine preceding text and following text of the missing symbol, and determine the recommended text by comparing the preceding text and the following text with the target text. When the electronic device detects both the preceding text and the following text from the target text, the electronic device may determine characters between the preceding text and the following text as recommended text. When the electronic device detects both the preceding text and the following text from the target text, the electronic device may change the missing symbol to a portion of the recommended text. When the electronic device detects only one of the preceding text and the following text from the target text, the recommended text may be determined from the first character of the target text to a character right after the following text or from a character right before the preceding text to the last character of the target text. When the electronic device detects only one of the preceding text and the following text from the target text, the electronic device may change the missing symbol to the full recommended text. When the electronic device fails to detect both the preceding text and the following text from the target text, the electronic device may not determine the recommended text. The electronic device may change the missing symbol to an icon indicating a voice segment. The electronic device may replay a recorded voice based on a user input to the icon indicating the voice segment.

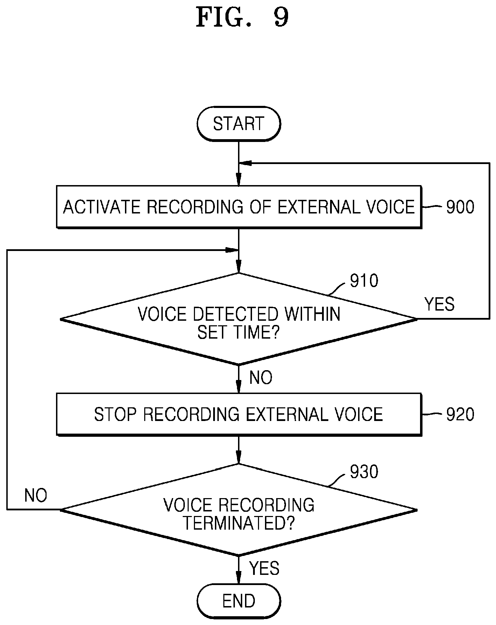

FIG. 9 is a flowchart for describing a method of recording an external voice by an electronic device, according to an embodiment of the present disclosure.

The electronic device may activate recording of an external voice in operation 900. The electronic device may use a microphone to start recording the external voice. In operation 910, the electronic device may determine whether the external voice is detected within a set period of time. When the external voice is detected within the set period of time, the electronic device may keep activating the recording of the external voice. When the external voice is not detected within the set period of time, the electronic device may stop recording the external voice in operation 920.

The electronic device may determine whether to stop recording the external voice in operation 930. When the external voice is no longer detected, the electronic device may stop voice recording based on a user input. For example, when a lecture or a meeting is over, the electronic device may stop voice recording based on a user input. In another embodiment, the electronic device may stop voice recording even without an extra command, along with termination of a note taking application. When the voice recording is not stopped, the electronic device may detect an external voice again.

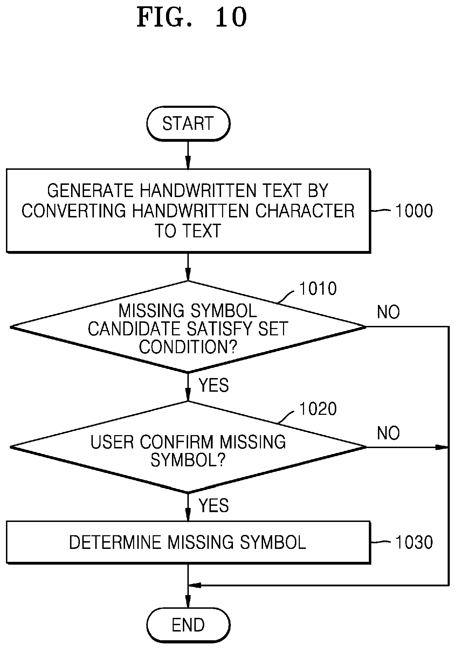

FIG. 10 is a flowchart for describing a method of determining a missing symbol among handwritten characters by an electronic device, according to an embodiment of the present disclosure.

In operation 1000, the electronic device may generate handwritten text by converting the handwritten characters to text. The electronic device may use an AI algorithm to generate the handwritten text from the handwritten characters.

The electronic device may determine whether a missing symbol candidate satisfies a set condition in operation 1010. The electronic device may determine at least one missing symbol candidate. For example, the electronic device may determine at least one line segment existing in the handwritten text as the missing symbol candidate. The electronic device may determine the candidates as the missing symbol when the missing symbol candidates are equal to or longer than a set length.

The electronic device may determine whether it is a missing symbol based on a user input in operation 1020. The electronic device may receive confirmation from the user of a missing symbol candidate which satisfies a set condition, to increase accuracy in distinguishing the missing symbol. For example, the electronic device may output a message requesting confirmation about whether missing symbol candidates are missing symbols through the display. In operation 1030, in response to user confirming that it is a missing symbol, the electronic device may determine the missing symbol candidate as the missing symbol.

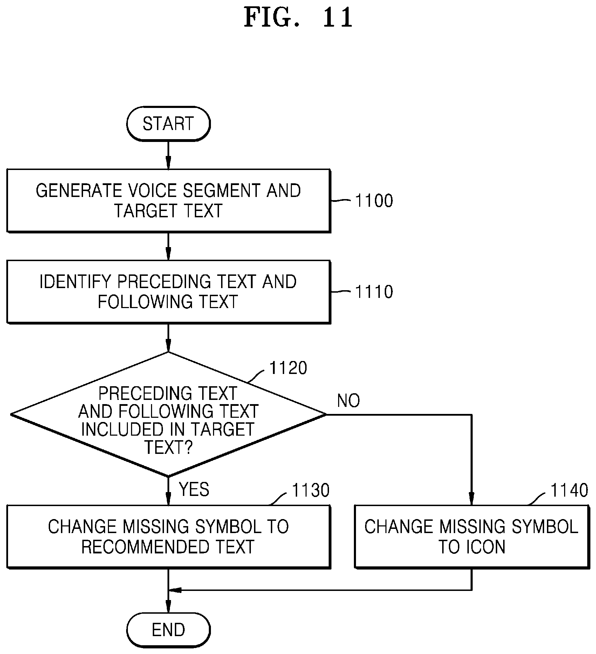

FIG. 11 is a flowchart for describing a method of changing a missing symbol to recommended text or an audio file by an electronic device, according to an embodiment of the present disclosure.

In operation 1100, the electronic device may generate a voice segment, and generate target text by converting the voice segment to the text. The electronic device may generate the voice segment based on a time for which a missing symbol is input. For example, the processor may generate the voice segment including a voice recorded from time when one missing symbol is input to time right after the next missing symbol is input. The electronic device may generate the target text by using a voice recognition technology to convert the voice segment to text.

The electronic device may identify preceding text and following text of the missing symbol in operation 1110. The preceding text and the following text may refer to a set number of characters located before or after the missing symbol.

The electronic device may identify whether the preceding text or the following text is included in the target text, in operation 1120. When the electronic device detects the preceding text and/or the following text from the target text, the electronic device may change the missing symbol to the recommended text in operation 1130. When the electronic device fails to detect both the preceding text and the following text from the target text, the electronic device may change the missing symbol to an icon indicating the voice segment, in operation 1140.

According to a technical aspect of the present disclosure, a method of correcting missing handwriting by an electronic device including a microphone and a display includes using the microphone to record an external voice, recognizing handwritten characters input based on an external input signal to the display, generating handwritten text by converting the handwritten characters to text, determining whether there is a missing symbol based on the handwritten text, in response to determining that there is the missing symbol, obtaining a voice segment including a voice recorded for a certain period of time including time at which the missing symbol is input among the recorded external voice, generating target text by converting the voice included in the voice segment to text, determining recommended text corresponding to a location of the missing symbol based on the target text and the handwritten text, and changing the missing symbol to the recommended text.

According to a technical aspect of the present disclosure, the determining of the recommended text may include determining a set number of characters among characters located before the missing symbol in the handwritten text as preceding text, determining a set number of characters among characters located after the missing symbol as following text, and determining recommended text suitable for a location of the missing symbol by comparing the preceding text and the following text with the target text.

According to a technical aspect of the present disclosure, the generating of the handwritten text may include using a set machine learning algorithm to convert handwritten characters to handwritten text (handwriting recognition (HWR)), and the machine learning algorithm may include at least one of CNN, RNN and CTC.

According to a technical aspect of the present disclosure, the determining of whether there is the missing symbol may include identifying at least one line segment among the handwritten characters, and determining the line segment as a missing symbol when the line segment is longer than a set value.

According to a technical aspect of the present disclosure, the recording of the external voice may include using the microphone to start recording an external voice, and in response to the external voice not being detected, stopping recording the external voice when a time for which the external voice is not detected is longer than a set time.

According to a technical aspect of the present disclosure, the electronic device may correct information missed by the user with high accuracy. Furthermore, as the missing information is determined by referring to only some voices recorded in a time including the information missing time rather than examining all the voices, the missing information may be determined within a short period of time.

Exemplary embodiments have thus far been described in the drawings and specification. Although specific terms are used to describe the embodiments in the specification, they are only used for the purpose of explaining the technical idea of the present disclosure and are not used to limit the meaning or restrict the scope of the present disclosure as set forth in the claims. Hence, it will be understood by those of ordinary skill in the art that there may be various modifications and other equivalent embodiments. Accordingly, the true scope of technical protection should be only defined by the technical idea of the following claims.

**Claims**

1. An electronic device (100) comprising:

   a display (120);
   a microphone (130);
   a memory (140) storing at least one instruction; and
   at least one processor (110) configured to execute the one or more instructions to:

   record, by using the microphone (130), an external voice,
   recognize handwritten characters input based on an external input signal to the display (120),
   generate handwritten text by converting the handwritten characters to text, determine whether there is a missing symbol based on the handwritten text,
   obtain, in response to determining that there is the missing symbol, a voice segment including a voice recorded for a certain period of time including a time at which the missing symbol is input among the recorded external voice,
   generate target text by converting voice included in the voice segment to text,
   determine recommended text corresponding to a location of the missing symbol based on the target text and the handwritten text, and
   change the missing symbol to the recommended text.

2. The electronic device of claim 1, wherein the at least one processor (110)

   is configured to
   determine a set number of characters among characters located before the missing symbol in the handwritten text as preceding text, determine a set number of characters among characters located after the missing symbol as following text, and

   determine recommended text suitable for a location of the missing symbol by comparing the preceding text and the following text with the target text.

3. The electronic device of claim 2, wherein the at least one processor (110) is configured to,

   in response to detecting both the preceding text and the following text from the target text, determine characters between the preceding text and the following text as the recommended text, and
   change the missing symbol to at least part of the recommended text.

4. The electronic device of claim 2 or 3, wherein the at least one processor (110) is configured to,

   in response to detecting only the preceding text but not the following text from the target text, determine characters from a character right after the preceding text to a last character of the target text as the recommended text, and
   change the missing symbol to the recommended text.

5. The electronic device of any of claims 2 and 4, wherein the at least one processor (110) is configured to,

   in response to detecting only the following text but not the preceding text from the target text, determine characters from a starting character of the target text to a character right before the following text as the recommended text, and
   change the missing symbol to the recommended text.

6. The electronic device of any of claims 2 and 5, wherein the at least one processor (110) is configured to,

   in response to detecting neither the preceding text nor the following text from the target text, change the missing symbol to an icon indicating the voice segment, and
   replay the voice segment in response to a user input to the icon.

7. The electronic device of any of claims 1 and 6, wherein:

   the at least one processor (110) is configured to convert, by using a set machine learning algorithm, handwritten characters to handwritten text (handwriting recognition (HWR)), and
   the machine learning algorithm comprises at least one of CNN, RNN and CTC.

8. The electronic device of any of claims 1 and 7, wherein the missing symbol is a dash symbol or an icon.

9. The electronic device of claim 8, wherein the at least one processor (110) is configured to identify at least one line segment among the handwritten characters, and determine the line segment as the dash symbol when the line segment is longer than a set value.

10. The electronic device of any of claims 1 and 9, wherein the at least one processor (110) is configured to determine an external voice recorded from a time when a handwritten character is input first after the missing symbol is input to a time when a next missing symbol is input as the voice segment.

11. The electronic device of any of claims 1 and 10, wherein the at least one

processor (110) is configured to start recording the external voice simultaneously with executing of a set application, and determine an external voice recorded from a time at which the application is executed to a time at which the missing symbol is input for the first time as the voice segment.

12. The electronic device of any of claims 1 and 11, wherein the at least one

processor (110) is configured to start recording, by using the microphone, the external voice, and in response to the external voice not being detected, stop recording the external voice when a time for which the external voice is not detected is longer than a set time.

13. The electronic device of any of claims 1 and 12, further comprising:

a communication module, wherein the at least one processor (110) is configured to establish, by using the communication module, a communication connection with an external device to receive voice data collected by the external device, and determine the voice segment by using the voice data.

14. A method of correcting missing handwriting, the method performed by an electronic device (100) including a microphone (130) and a display (120), the method comprising:

recording, by using the microphone (130), an external voice, recognizing handwritten characters input based on an external input signal to the display (120), generating handwritten text by converting the handwritten characters to text, determining whether there is a missing symbol based on the handwritten text, obtaining, in response to determining that there is the missing symbol, a voice segment including a voice recorded for a certain period of time including a time at which the missing symbol is input among the recorded external voice, generating target text by converting a voice included in the voice segment to text, determining recommended text corresponding to a location of the missing symbol based on the target text and the handwritten text, and changing the missing symbol to the recommended text.

15. A computer-readable recording medium having recorded thereon a program for performing the method of claim 14 on a computer.

# FIG. 1

100

110

PROCESSOR

120

DISPLAY

130

COMMUNICATION MODULE

140

MICROPHONE

150

MEMORY

# FIG. 2

# FIG. 3

The time when no voice appeared

$t_a$  $t_b$  $t_c$  Real time

Sequential time between two recordings

$t_a$  $t_b\,t_{c'}$  Record time

EP 4 579 655 A1

# FIG. 4

# FIG. 5

EP 4 579 655 A1

# FIG. 6A

| Position of missing symbol | N previous nearby characters | | | | | | N next nearby characters | | | | | |
|---|---|---|---|---|---|---|---|---|---|---|---|---|
| Miss 1st | | | | | | | | S | e | l | e | n | i |
| Miss 2nd | o | r | k | i | n | g | | | T | h | e | r | e | |
| Miss 3rd | | R | e | p | l | y | | | | i | n | p | u | t | |
| Miss 4th | | | | | | | | | | | | | |

EP 4 579 655 A1

# FIG. 6B

600

☐ r e p l y ☐ u ··· a t t r i b u t e ☐ ☐ i n p u t ☐ @

Char7 --------- Char2 Char1 -- Char1

602

☐ r e p l y ☐ u ··· a t t r i b u t e ☐ i n p u t ☐ @

Char7 --------- Char2 Char1 ---------------------------- Char1

EP 4 579 655 A1

# FIG. 6C

610

| t | h | e | n | ⋯ | | c | h | o | o | s | i | n | g | ⋯ | c | o | m | p | a | n | y | | t | h | e | r | e | | a |

Char7 ----- Char2 Char1 -- Char1

612

| t | h | e | n | ⋯ | | c | h | o | o | s | i | n | g | | ⋯ | c | o | m | p | a | n | y | | t | h | e | r | e | | a |

Char5 ---- Char2 ----------------- Char1

# FIG. 6D

EP 4 579 655 A1

# FIG. 7A

704

upload the file using
Selenium if the HTML
contains attribute

702

700

We can reply upload
input[@type='file']. If this
is not present in the HTML
part of the application.....

# FIG. 7B

710

When you are working
*on the automation part in a testing company.*
There are 2 ways to auto mate the same....

# FIG. 7C

724

722

720

Selenium WebDriver.
Selenium WebDriver allows
you to choose a programming
language to create test
scripts.....

# FIG. 8

```
                        ┌─────────┐
                        │  START  │
                        └────┬────┘
                             │
                             ▼
        ┌──────────────────────────────────────┐
        │   START RECORDING EXTERNAL VOICE      │──── 800
        └──────────────────┬───────────────────┘
                           │
                           ▼
        ┌──────────────────────────────────────┐
        │   RECOGNIZE HANDWRITTEN CHARACTER     │──── 810
        └──────────────────┬───────────────────┘
                           │
                           ▼
        ┌──────────────────────────────────────┐
        │      DETERMINE WHETHER THERE IS       │──── 820
        │           MISSING SYMBOL              │
        └──────────────────┬───────────────────┘
                           │
                           ▼
        ┌──────────────────────────────────────┐
        │  DETERMINE VOICE SEGMENT RECORDED     │
        │  IN TIME FOR WHICH MISSING SYMBOL IS  │──── 830
        │  INPUT AND GENERATE TARGET CONTENT    │
        └──────────────────┬───────────────────┘
                           │
                           ▼
        ┌──────────────────────────────────────┐
        │   DETERMINE RECOMMENDED TEXT AND      │
        │     CHANGE MISSING SYMBOL TO          │──── 840
        │        RECOMMENDED TEXT               │
        └──────────────────┬───────────────────┘
                           │
                           ▼
                        ┌─────────┐
                        │   END   │
                        └─────────┘
```

# FIG. 9

START

ACTIVATE RECORDING OF EXTERNAL VOICE — 900

VOICE DETECTED WITHIN SET TIME? — 910

YES

NO

STOP RECORDING EXTERNAL VOICE — 920

VOICE RECORDING TERMINATED? — 930

NO

YES

END

# FIG. 10

```
                    ┌─────────┐
                    │  START  │
                    └────┬────┘
                         │
          ┌──────────────▼──────────────┐
          │   GENERATE HANDWRITTEN TEXT BY  │
          │ CONVERTING HANDWRITTEN CHARACTER │──── 1000
          │            TO TEXT              │
          └──────────────┬──────────────┘
                         │
                    ╱────▼────╲           1010
                  ╱  MISSING SYMBOL ╲        NO
                ╱  CANDIDATE SATISFY SET ╲ ──────────┐
                ╲     CONDITION?      ╱              │
                  ╲────────┬────────╱                │
                         │ YES                       │
                    ╱────▼────╲          1020        │
                  ╱  USER CONFIRM MISSING ╲  NO       │
                ╲      SYMBOL?         ╱ ───────────┤
                  ╲────────┬────────╱                │
                         │ YES                       │
          ┌──────────────▼──────────────┐           │
          │   DETERMINE MISSING SYMBOL    │──── 1030 │
          └──────────────┬──────────────┘           │
                         │◄─────────────────────────┘
                    ┌────▼────┐
                    │   END   │
                    └─────────┘
```

# FIG. 11

```
            ( START )
                |
                v
   ┌─────────────────────────────┐
   │ GENERATE VOICE SEGMENT AND  │──1100
   │        TARGET TEXT          │
   └─────────────────────────────┘
                |
                v
   ┌─────────────────────────────┐
   │  IDENTIFY PRECEDING TEXT AND│──1110
   │      FOLLOWING TEXT         │
   └─────────────────────────────┘
                |
                v
             1120
         ◇─────────────◇
        PRECEDING TEXT          NO
     AND FOLLOWING TEXT  ──────────────┐
      INCLUDED IN TARGET               │
           TEXT?                       │
         ◇─────────────◇               │
            |                          │
           YES      1130               │      1140
            v                          v
   ┌─────────────────────────┐   ┌─────────────────────┐
   │ CHANGE MISSING SYMBOL TO│   │ CHANGE MISSING SYMBOL│
   │    RECOMMENDED TEXT     │   │      TO ICON        │
   └─────────────────────────┘   └─────────────────────┘
            |                          │
            v<─────────────────────────┘
         ( END )
```

## INTERNATIONAL SEARCH REPORT

| International application No. |
|---|
| **PCT/KR2023/014077** |

| A. | CLASSIFICATION OF SUBJECT MATTER |
|---|---|

**G10L 15/26**(2006.01)i; **G10L 15/04**(2006.01)i; **G06F 3/04817**(2022.01)i; **G06F 3/04842**(2022.01)i; **G06F 3/16**(2006.01)i; **G06N 20/00**(2019.01)i; **G11B 20/10**(2006.01)i

According to International Patent Classification (IPC) or to both national classification and IPC

| B. | FIELDS SEARCHED |
|---|---|

Minimum documentation searched (classification system followed by classification symbols)

G10L 15/26(2006.01); G06F 3/048(2006.01); G06F 3/0488(2013.01); G06Q 50/20(2012.01); G10L 13/08(2006.01); G10L 15/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음성(voice), 녹음(record), 필기(hand-writing), 텍스트(text), 변환(conversion), 누락(omission), 기호(sign), 세그먼트(segment), 추천(recommend)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2021-0048462 A (SAMSUNG ELECTRONICS CO., LTD.) 03 May 2021 (2021-05-03)<br>See paragraphs [0013], [0045] and [0059]; and figure 1. | 1-15 |
| A | KR 10-2060818 B1 (CHOI, Yu Jun) 17 February 2020 (2020-02-17)<br>See paragraphs [0006] and [0047]; and figures 2 and 5. | 1-15 |
| A | KR 10-2020-0024484 A (NAMUEN) 09 March 2020 (2020-03-09)<br>See paragraphs [0016] and [0083]; and figure 5. | 1-15 |
| A | KR 10-2019-0049263 A (EWHA UNIVERSITY - INDUSTRY COLLABORATION FOUNDATION) 09 May 2019 (2019-05-09)<br>See paragraphs [0041] and [0057]; and figure 8. | 1-15 |
| A | US 2020-0152200 A1 (ALIBABA GROUP HOLDING LIMITED) 14 May 2020 (2020-05-14)<br>See paragraphs [0045] and [0152]; and figure 1. | 1-15 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 December 2023** | **12 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/014077**

| Patent document cited in search report | | | Publication date (day/month/year) | Patent family member(s) | | | Publication date (day/month/year) |
|---|---|---|---|---|---|---|---|
| KR | 10-2021-0048462 | A | 03 May 2021 | CN | 103677261 | A | 26 March 2014 |
| | | | | CN | 109683848 | A | 26 April 2019 |
| | | | | CN | 109739469 | A | 10 May 2019 |
| | | | | EP | 2723049 | A1 | 23 April 2014 |
| | | | | EP | 3435645 | A1 | 30 January 2019 |
| | | | | JP | 2014-064278 | A | 10 April 2014 |
| | | | | JP | 2019-135831 | A | 15 August 2019 |
| | | | | JP | 6475908 | B2 | 27 February 2019 |
| | | | | JP | 6710791 | B2 | 17 June 2020 |
| | | | | KR | 10-2014-0039961 | A | 02 April 2014 |
| | | | | KR | 10-2020-0010537 | A | 30 January 2020 |
| | | | | KR | 10-2020-0067798 | A | 12 June 2020 |
| | | | | KR | 10-2022-0031586 | A | 11 March 2022 |
| | | | | KR | 10-2023-0002130 | A | 05 January 2023 |
| | | | | KR | 10-2070196 | B1 | 30 January 2020 |
| | | | | KR | 10-2120984 | B1 | 10 June 2020 |
| | | | | KR | 10-2245288 | B1 | 27 April 2021 |
| | | | | KR | 10-2368698 | B1 | 02 March 2022 |
| | | | | KR | 10-2475223 | B1 | 09 December 2022 |
| | | | | US | 10042603 | B2 | 07 August 2018 |
| | | | | US | 10684821 | B2 | 16 June 2020 |
| | | | | US | 11048474 | B2 | 29 June 2021 |
| | | | | US | 2014-0082501 | A1 | 20 March 2014 |
| | | | | US | 2018-0341458 | A1 | 29 November 2018 |
| | | | | US | 2019-0265946 | A1 | 29 August 2019 |
| | | | | US | 2021-0286590 | A1 | 16 September 2021 |
| | | | | WO | 2014-046475 | A1 | 27 March 2014 |
| KR | 10-2060818 | B1 | 17 February 2020 | None | | | |
| KR | 10-2020-0024484 | A | 09 March 2020 | None | | | |
| KR | 10-2019-0049263 | A | 09 May 2019 | None | | | |
| US | 2020-0152200 | A1 | 14 May 2020 | CN | 109285548 | A | 29 January 2019 |
| | | | | US | 11664030 | B2 | 30 May 2023 |
| | | | | WO | 2019-015505 | A1 | 24 January 2019 |

Form PCT/ISA/210 (patent family annex) (July 2022)